# EUROPEAN PATENT APPLICATION

(11) **EP 2 741 004 A2**
(43) Date of publication of application: **11.06.2014**
(21) Application number: 13196226.8
(22) Date of filing: 09.12.2013
(51) Int. Cl.: F23R 3/00, F23R 3/06, F01D 9/02

(54) **System for protecting an inner wall of a combustor**

(30) Priority: 10.12.2012 US 201213710395
(71) Applicant: General Electric Company, Schenectady, New York 12345 (US)
(72) Inventor: Kidder, Kyle Lee, Greenville, SC South Carolina 29615 (US); Brown, Jerome D., Greenville, SC South Carolina 29615 (US)
(74) Representative: Cleary, Fidelma

(57) **Abstract**

A system including a gas turbine combustor (16), including an inner wall (92) disposed about a combustion chamber, and an outer wall (48) disposed about the inner wall (92), wherein a coolant flow path extends between the inner and outer walls, wherein the inner wall (92) comprises a material (98) blocking a plurality of openings (102), and the plurality of openings (102) are configured to open after the material (98) is consumed or depleted to define a plurality of coolant passages through the inner wall (92).

## Description

### BACKGROUND

The subject matter disclosed herein relates to gas turbine engines and, more specifically, to a system for protecting an inner wall of a combustor.

Gas turbine engines may include a combustor having a liner, and a transition piece that connects the combustor to a turbine. As an air-fuel mixture combusts inside of the combustor, the hot combustion gases travel through the combustor and into the turbine, generating power. Unfortunately, the hot combustion gases may oxidize the combustor causing undesirable consumption/depletion. Over time excessive oxidization may result in costly repairs and replacement.

### BRIEF DESCRIPTION

In a first embodiment a system, including a gas turbine combustor, including an inner wall disposed about a combustion chamber, and an outer wall disposed about the inner wall, wherein a coolant flow path extends between the inner and outer walls, wherein the inner wall comprises a material blocking a plurality of openings, and the plurality of openings are configured to open after the material is consumed or depleted to define a plurality of coolant passages through the inner wall.

In a second embodiment a system, including a gas turbine engine, including a coolant flow path, a combustion gas path, and a wall between the coolant flow path and the combustion gas path, wherein a first side of the wall faces the coolant flow path, and a second side of the wall faces the combustion gas path, wherein the wall comprises a material blocking a plurality of openings, and the plurality of openings are configured to open after oxidation of the material to define a plurality of coolant passages through the wall.

In a third embodiment a system, including a combustion system, including a coolant flow path, a combustion gas path, and a wall between the coolant flow path and the combustion gas path, wherein a first side of the wall faces the coolant flow path, and a second side of the wall faces the combustion gas path, wherein the wall comprises a material blocking a plurality of openings, and the plurality of openings are configured to open after oxidation of the material to define a plurality of coolant passages through the wall.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a gas turbine having a system for protecting an inner wall of a combustor;
FIG. 2 is a cross-sectional view of an embodiment of a combustor having a system for protecting an inner wall of the combustor;
FIG. 3 is a partial cross-sectional view of an embodiment of a combustor wall with a thermal barrier coating spallation initiated effusion cooling system within line 3-3 of FIG. 2;
FIG. 4 is a partial cross-sectional view of an embodiment of a combustor wall with a thermal barrier coating spallation initiated effusion cooling system in operation within line 3-3 of FIG. 2;
FIG. 5 is a partial cross-sectional view of an embodiment of a combustor wall with an oxidation initiated effusion cooling system within line 3-3 of FIG. 2;
FIG. 6 is a partial cross-sectional view of an embodiment of a combustor wall with an oxidation initiated effusion cooling system within line 3-3 of FIG. 2;
FIG. 7 is a partial cross-sectional view of an embodiment of a combustor wall with an oxidation initiated effusion cooling system in operation along within line 3-3 of FIG. 2;
FIG. 8 is a partial cross-sectional view of an embodiment of a combustor wall with a thermal barrier coating spallation initiated effusion cooling system and an oxidation initiated effusion cooling system within line 3-3 of FIG. 2;
FIG. 9 is a partial cross-sectional view of an embodiment of a combustor wall with a thermal barrier coating spallation initiated effusion cooling system in operation and an oxidation initiated effusion cooling system within line 3-3 of FIG. 2;
FIG. 10 is a partial cross-sectional view of an embodiment of a combustor wall with a thermal barrier coating spallation initiated effusion cooling system and an oxidation initiated effusion cooling system in operation within line 3-3 of FIG. 2;
FIG. 11 is a partial sectional view of an embodiment of a combustor wall with a system for protecting the inner wall of a combustor along line 11-11 of FIG. 2; and
FIG. 12 is a partial sectional view of an embodiment of a combustor wall with a system for protecting the inner wall of a combustor along line 11-11 of FIG. 2.

### DETAILED DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

The disclosed embodiments are generally directed towards a system for protecting an inner wall of a combustor. More specifically, the disclosed embodiments are directed towards an oxidation initiated effusion cooling system, a thermal barrier coating spallation initiated effusion cooling system, or a combination thereof. These systems enable a cooling airflow or protective film to cover the inner wall of the combustor, thereby blocking the hot combustion gases from oxidizing (e.g., depleting, consuming, etc.) the combustor wall. For example, the oxidation initiated effusion cooling system includes blind holes in the combustor wall that open once a portion of the combustor wall oxidizes. After opening, the blind holes provide a cooling airflow or film that protects the combustor wall from further oxidation. In another example, the thermal barrier coating spallation initiated effusion cooling system includes apertures in the combustor wall covered by a thermal barrier coating. After the thermal barrier coating separates from the combustor wall, the apertures open providing a cooling airflow or film that limits oxidization of the combustor wall. In still another example, a combustor may use a combination of apertures and blind holes. Thus, once the thermal barrier coating separates from the combustor wall a cooling airflow or film starts flowing through the apertures. However, if the cooling airflow from the apertures is unable to sufficiently block oxidization, then the continued oxidization may gradually open the blind holes, thus providing additional cooling airflow for protection of the combustor wall against oxidation.

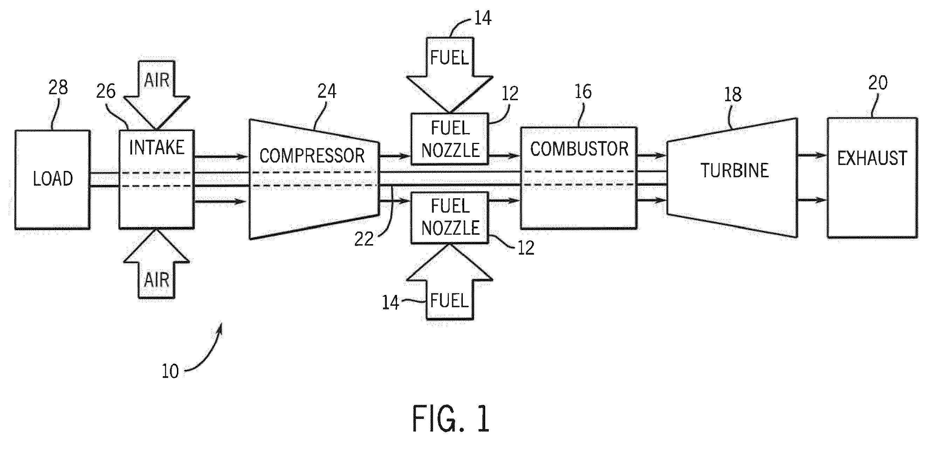

FIG. 1 is a block diagram of an embodiment of a gas turbine system 10 having a system for protecting an inner wall of a combustor from excessive oxidization of a combustor liner and transition piece. The turbine system 10 may use liquid or gas fuel, such as natural gas and/or a hydrogen rich synthetic gas, to run the turbine system 10. As depicted, a plurality of fuel nozzles 12 intakes a fuel supply 14, mixes the fuel with air, and distributes the air-fuel mixture into a combustor 16. The air-fuel mixture combusts in a chamber within combustor 16, thereby creating hot pressurized exhaust gases that can potentially oxidize the combustor 16. Again, the disclosed embodiments provide protection (e.g., cooling airflow) to reduce such oxidation. The combustor 16 directs the exhaust gases through a turbine 18 toward an exhaust outlet 20. As the exhaust gases pass through the turbine 18, the gases force one or more turbine blades to rotate a shaft 22 along an axis of the system 10. As illustrated, the shaft 22 may be connected to various components of turbine system 10, including a compressor 24. The compressor 24 also includes blades that may be coupled to the shaft 22. As the shaft 22 rotates, the blades within the compressor 24 also rotate, thereby compressing air from an air intake 26 through the compressor 24 and into the fuel nozzles 12 and/or combustor 16. The shaft 22 may also be connected to a load 28, which may be a vehicle or a stationary load, such as an electrical generator in a power plant or a propeller on an aircraft, for example. As will be understood, the load 28 may include any suitable device capable of being powered by the rotational output of turbine system 10.

In operation, air enters the turbine system 10 through the air intake 26 and may be pressurized in the compressor 24. The compressed air may then be mixed with gas for combustion within combustor 16. For example, the fuel nozzles 12 may inject a fuel-air mixture into the combustor 16 in a suitable ratio for optimal combustion, emissions, fuel consumption, and power output. The combustion generates hot pressurized exhaust gases, which then drive one or more blades within the turbine 18 to rotate the shaft 22 and, thus, the compressor 24 and the load 28. The rotation of the turbine blades causes a rotation of shaft 22, thereby causing blades within the compressor 22 to draw in and pressurize the air received by the intake 26.

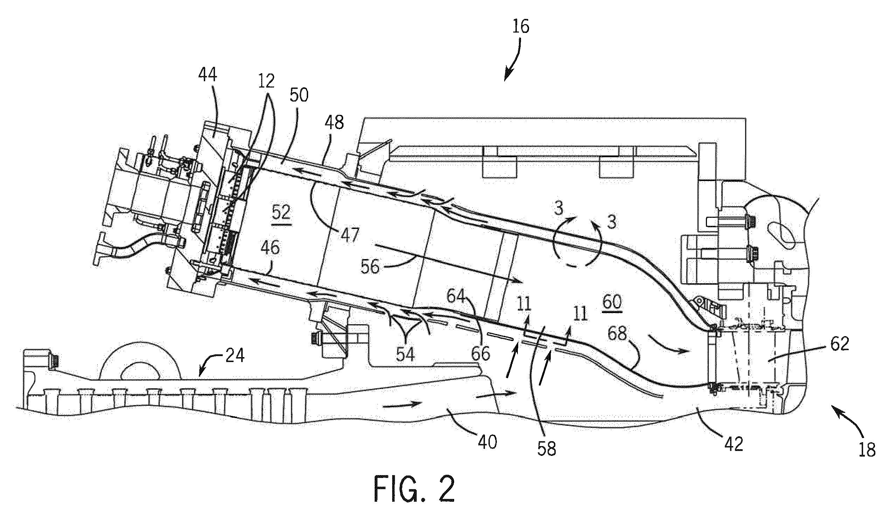

FIG. 2 is a cross-sectional view of an embodiment of a combustor 16 having a system for protecting an inner wall of the combustor from excessive oxidization. Again, the disclosed embodiments provide protection (e.g., cooling airflow) to reduce such oxidation. As will be appreciated, the combustor 16 is generally fluidly coupled to the compressor 24 and the turbine 18. The compressor 24 may include a diffuser 40 and a discharge plenum 42 that are coupled to each other in fluid communication to facilitate the channeling of compressed air to the combustor 16. In the illustrated embodiment, the combustor 16 includes a cover plate 44 at the upstream head end of the combustor 16. The cover plate 44 may at least partially support the fuel nozzles 12 and provide a path through which air and fuel are directed to the fuel nozzles 12.

The combustor 16 includes a combustor liner 46 and transition piece 58 disposed within a flow sleeve 48. The arrangement of the liner 46 and the flow sleeve 48, as shown in FIG. 2, is generally concentric and may define a passage 50. In certain embodiments, the flow sleeve 48 and the liner 46 may define a first or upstream hollow annular wall of the combustor 16. The interior of the liner 46 includes an interior surface 47 and may define a combustion chamber or cavity 52. The flow sleeve 48 may include a plurality of inlets 54, which provide a flow path for at least a portion of the air from the compressor 24 into the passage 50. In other words, the flow sleeve 48 may be perforated with a pattern of openings to define a perforated wall.

An interior cavity 60 of the transition piece 58 generally provides a path by which combustion gases from the combustion chamber 52 may be directed through a turbine nozzle 62 and into the turbine 18. In the depicted embodiment, the transition piece 58 may be coupled to the downstream end of the liner 46 (with respect to direction 56), generally about a downstream end portion 64 (coupling portion). An annular wrapper 66 and a seal may be disposed between the downstream end portion 64 and the transition piece 58. The seal may secure the outer surface of the wrapper 66 to the inner surface 68 of the transition piece 58.

As discussed above, the turbine system 10, in operation, may intake air through the air intake 26. The compressor 24, which is driven by the shaft 22, rotates and compresses the air. The compressed air is discharged into the diffuser 40, as indicated by the arrows shown in FIG. 2. The majority of the compressed air is further discharged from the compressor 24, by way of the diffuser 40, through a plenum 42 into the combustor 16. The air in the annular passage 50 is then channeled upstream (e.g., in the direction of fuel nozzles 12), such that the air flows over the transition piece 58 and the downstream end portion 64 of the liner 46. In the illustrated embodiment, the airflow provides forced convection cooling of the transition piece 58 and the liner 46, as the air is travels upstream towards the fuel nozzles 12 through the annular passage 50. In the present discussion, the transition piece 58 and the liner 46 both represent an inner wall of the combustor 16, and include the cooling system discussed in detail below. In the fuel nozzles 12, the air combines with fuel and ignites within the combustion chamber 52. The resulting combustion gases are channeled from the chamber 52 into the transition piece cavity 60 and through the turbine nozzle 62 to the turbine 18.

As discussed above, the hot combustion gases flow from the chamber 52 through the transition piece 58 to the turbine 18. The temperature of the combustion gases increases the metal temperature of the liner 46 and transition piece 58, enabling the metal to combine with oxygen (i.e., the metal oxidizes). The resulting oxidized metal breaks down the combustor 16. Thus, without sufficient protection, the liner 46 and the transition piece 58 gradually oxidizes (e.g., depletes, is consumed, etc.), resulting in costly repairs and replacement. In order to reduce oxidization, a thermal barrier coating may be used to protect the liner 46 and transition piece 58. More specifically, the thermal barrier coating covers the interior surface 47 of the liner 46 and the interior surface 68 transition piece 58, thereby blocking the combustion gases from interacting with the metal alloys (i.e., blocking oxidization). Unfortunately, the thermal barrier coating may gradually erode and/or separate from the liner 46 and transition piece 58, allowing oxidization. Over time, excessive oxidization may cause undesirable deterioration of the combustor 16.

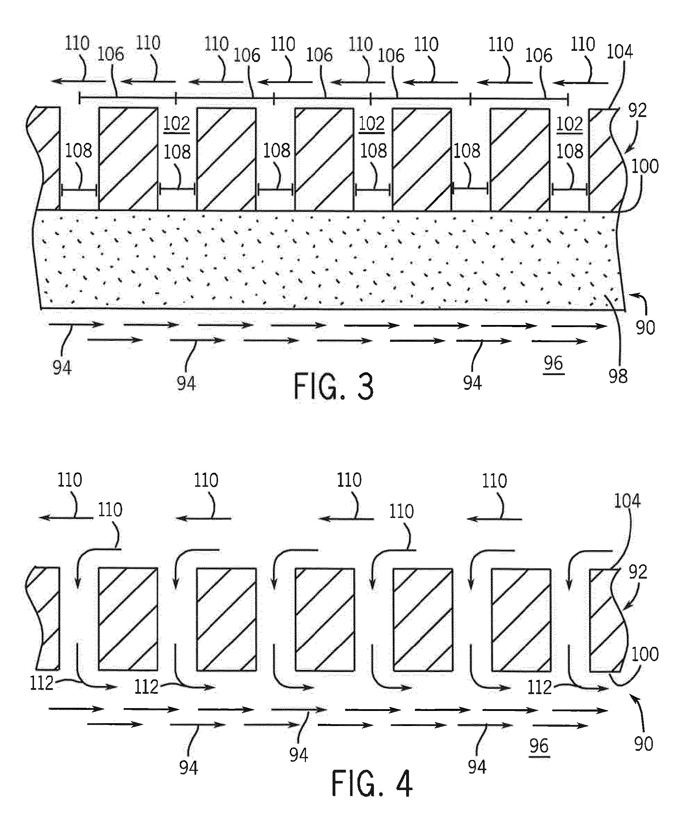

FIG. 3 is a partial cross-sectional view of an embodiment of a combustor wall with a thermal barrier coating (TBC) spallation initiated effusion cooling system 90 within line 3-3 of FIG. 2. As discussed above, the TBC spallation initiated effusion cooling system 90 protects a combustor wall 92 from excessive oxidation (e.g., depletion, consumption, etc.) with oxidizing combustion gases 94 traveling through a combustor cavity 96. During operation, the high temperatures of the combustion gases heat the metal. Without protection, the high metal temperatures accelerate oxidation of the metal (i.e., oxygen combines with the metal causing the metal to breakdown). Continued oxidization may therefore lead to excessive depletion/consumption of the metal and thus costly repairs and replacements. As illustrated, the system 90 includes a thermal barrier coating (TBC) 98 covering an interior surface 100 of the combustor wall 92. Moreover, the system 90 includes multiple apertures 102 in the combustor wall 92 between the exterior surface 104 and the interior surface 100 of the combustor wall 92. As illustrated, the apertures 102 are uniformly separated a distance 106, and define uniform widths 108. In other embodiments, the distance 106 and the aperture widths 108 may differ between apertures 102 (i.e., the apertures 102 may be uniformly or non-uniformly spaced or sized). These apertures 102 facilitate cooling (e.g., effusion cooling, film cooling, etc.) and protection of the interior surface 100 with compressed air 110, after separation of the TBC 98 (i.e., the apertures 102 open once the TBC 98 separates (e.g., erodes or spalls) from the interior surface 100).

FIG. 4 is a partial cross-sectional view of an embodiment of a combustor wall 92 with a thermal barrier coating spallation initiated effusion cooling system 90 in operation within line 3-3 of FIG. 2. During operation, the TBC 98 protects the metal combustor wall 92 from the oxidizing combustion gases 94. The TBC 98 may be a ceramic barrier coating. However, over time the TBC 98 may erode or spall (i.e., be depleted or consumed) from the interior surface 100 leaving the metal interior surface 100 unprotected. As illustrated in FIG. 3, the thermal barrier coating 98 has separated (or worn away) from the interior surface 100 of the combustor wall 92. As explained above, the separation of the TBC 98 opens the apertures 102, enabling compressed air 110 to flow through the combustor wall 92 and into the combustor cavity 96. After exiting the apertures 102, the compressed air 110 creates a film of air 112. The film of air 112 reduces combustor oxidation (e.g., depletion, consumption, etc.) by cooling the interior surface 100, which blocks or reduces oxidation of the combustor wall 92.

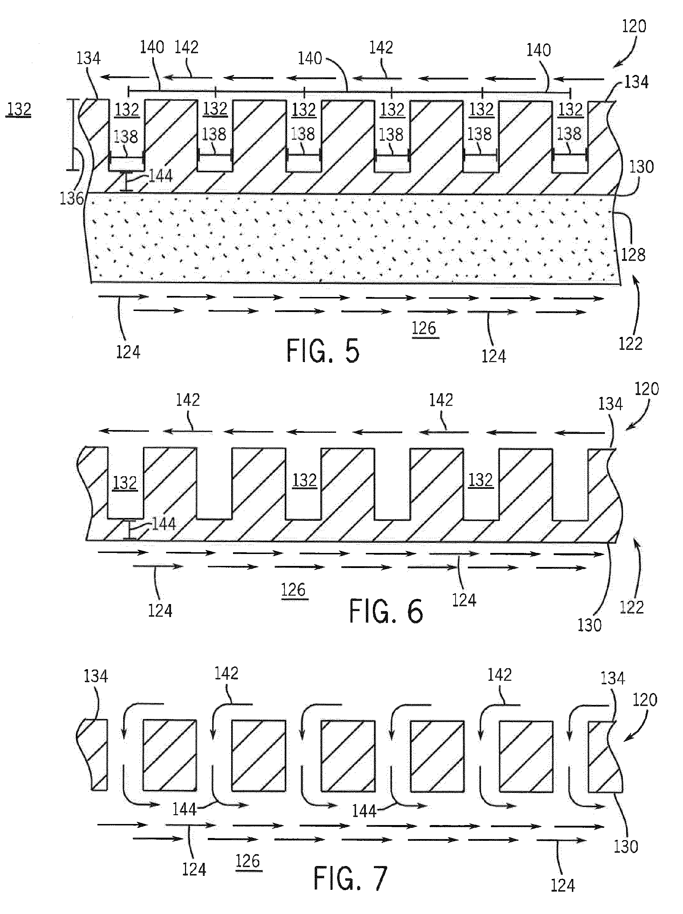

FIG. 5 is a partial cross-sectional view of an embodiment of a combustor wall 120 with an oxidation initiated effusion cooling system 122 within line 3-3 of FIG. 2. The oxidation initiated effusion cooling system 122, like the TBC spallation initiated effusion cooling system 90, protects a combustor wall 120 from excessive oxidation (e.g., depletion, consumption, etc.) from oxidizing combustion gases 124 that travel through a combustor cavity 126. As explained above, the high temperatures of the combustion gases heat the metal facilitating oxidation (e.g., breakdown of the metal). Continued oxidization may result in excessive depletion/consumption of the combustor wall 120, and thus costly repairs and replacements. As illustrated, the system 122 may include a thermal barrier coating (TBC) 128 covering an interior surface 130 of the combustor wall 120. Moreover, the system 122 includes multiple blind holes 132 in an exterior surface 134 of the combustor wall 120. As illustrated, these blind holes 132 penetrate the combustor wall 120 by a distance 136 from the exterior surface 134, define equal widths 138, and are separated from each other by an equal distance 140. For example, the distance 136 may be approximately 50 to 100, 75 to 99, or 80 to 95 percent of the thickness of the wall 120. In other embodiments, the blind holes 132 may penetrate more or less into the combustion wall 120. In still other embodiments, the depth 136 of each blind hole 132 may differ from the other blind holes 132. Moreover, the width 138 of the blind holes 132 and the distance 140 between blind holes 132 may be uniform or non-uniform in order to provide oxidation protection in specific regions of the combustor wall 120. During operation, the blind holes 132 (once opened through the wall 120) facilitate effusion cooling of the interior surface 130 (i.e., oxidation protection of interior surface 130) with compressed air 142. More specifically, after the TBC 128 separates from the interior surface 130, the system 122 allows the combustion gases to potentially oxidize (i.e., deplete, consume, etc.) the combustor wall 120 by a distance 144. After the combustion gases 124 oxidize and remove a portion of the wall 120, equal to distance 144, the blind holes 132 open and enable cooling (e.g., effusion cooling, film cooling, etc.) that then protects the wall 120 from further oxidation.

FIG. 6 is a partial cross-sectional view of an embodiment of the combustor wall without a thermal barrier coating and the oxidation initiated effusion cooling system 122 along line 3-3. During operation, the TBC 128 (seen in FIG. 5) protects the metal combustor wall 122 from the oxidizing combustion gases 124. However, over time, the TBC 128 may separate (e.g., erode or spall) from the interior surface 130, leaving the metal interior surface 130 unprotected. As illustrated, without the TBC 128, the combustion wall 120 is exposed to the combustion gases 124. Over time, the combustion gases 124 allow oxidation of the wall 120, and as the wall 120 oxidizes it begins to degrade. After oxidizing (e.g., depleting, consuming, etc.) the wall 120 partially, through a distance 144, the blind holes 132 open and enable effusion cooling.

FIG. 7 is a partial cross-sectional view of an embodiment of a combustor wall 120 with an oxidation initiated effusion cooling system 122 in operation within line 3-3 of FIG. 2. As illustrated, oxidation has worn away the combustor wall 120 by the distance 144, thereby opening the blind holes 132 completely through the wall 120 from the exterior surface 134 to the interior surface 130. Once oxidation opens the blind holes 132, compressed air 142 is able to pass through the combustor wall 120 and into the combustor cavity 126. As the compressed air 142 enters the combustor cavity 126, the air 142 creates a film of air 144. The film of air 144 cools the metal interior surface 130, while also blocking or reducing further oxidation of the combustor wall 120. In other words, the film of air 144 creates a protective shield or blanket along the wall 120, thereby blocking the combustion gas from contacting and oxidizing the surface 130 of the wall 120.

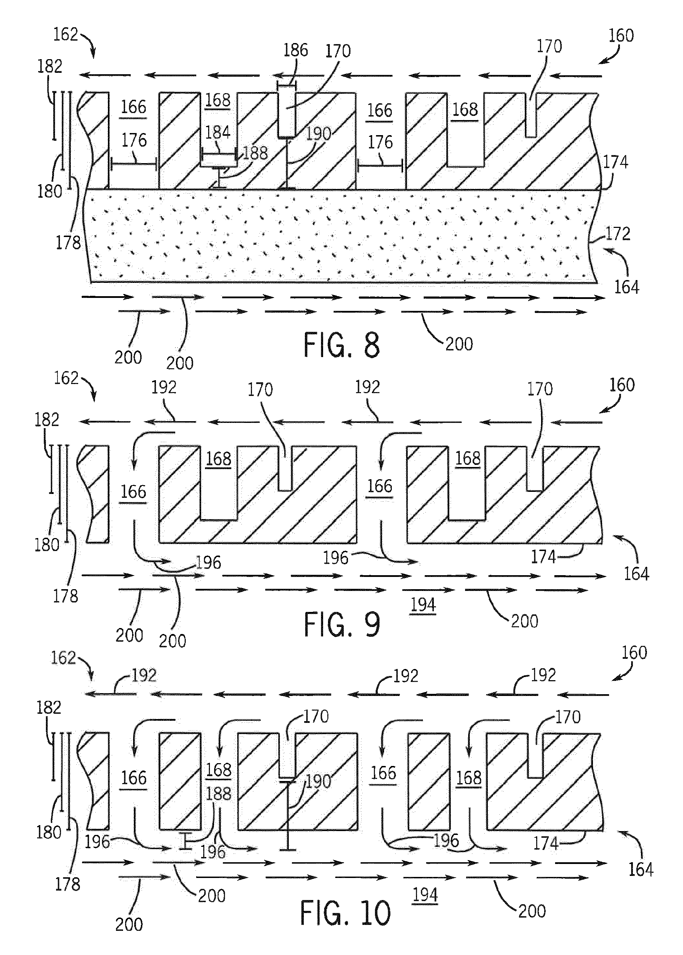

FIG. 8 is a partial cross-sectional view of an embodiment of a combustor wall 160 with a thermal barrier coating spallation initiated effusion cooling system 162 and an oxidation initiated effusion cooling system 164 within line 3-3 of FIG. 2. As illustrated, apertures 166 of the thermal barrier coating spallation initiated effusion cooling system 162 may be used in combination with blind holes 168 and 170 of the oxidation initiated effusion cooling system 164. The combination of the two systems 162 and 164 enables immediate and delayed effusion cooling protection of the combustor wall 160. More specifically, loss of a thermal barrier coating 172 enables apertures 166 to provide immediate effusion cooling (e.g., oxidation protection) for the combustor wall 160. If the apertures 166 are unable to provide adequate oxidation protection, the blind holes 168 and 170 will provide additional effusion cooling (e.g., oxidation protection) as the combustor wall 160 oxidizes and opens the blind holes 168 and 170. In other words, apertures 166 may provide the primary oxidation protection, while blind holes 168 and 170 function as a secondary protection, in the event the combustor wall 160 oxidizes (e.g., depletes, consumes, etc.) away a portion of the interior surface 174.

As illustrated, the apertures 166 define equal widths 176 and depths 178. As explained above, the widths 176 may be uniform or non-uniform depending on effusion cooling desired on different portions of the combustor wall 160. Moreover, the apertures 166 completely penetrate the combustor wall 160, enabling immediate effusion cooling upon removal of the TBC 172. As will be appreciated, the blind holes 168 and 170 likewise define respective depths 180 and 182; and respective widths 184 and 186. As illustrated, the blind holes 168 and 170 differ in dimensions. Specifically, blind hole 168 defines a depth 180 and width 184 greater than the depth 182 and width 186 of blind hole 170 (e.g., 10, 15, 25, 50, 75, percent greater in depth and width). Accordingly, oxidation of the combustor wall 160 will open blind holes 168 before opening blind hole 170. Indeed, as oxidation removes an amount of the combustor wall 160 equal to distance 188, the oxidation opens blind hole 168. The effusion cooling flowing through the holes 168 then combines with the effusion cooling airflow through the apertures 166, increasing the overall oxidation protection for the combustor wall 160. Moreover, if oxidation continues and penetrates a distance 190, the oxidation will open blind holes 170, thereby increasing the effusion cooling of the combustor wall 160. Accordingly, as oxidation increases so does effusion cooling. In other words, the response to oxidation may vary in response to oxidation of the combustor wall 160. Moreover, blind hole 168 may provide more effusion cooling (i.e., oxidation protection) than the blind hole 170, because of the difference in widths 184 and 186. In other embodiments, the depths and widths of the blind holes 168 and 170 may vary. For example, the depths 180 and 182 of the blind holes 168 and 170 may increase, thereby reducing distances 188 and 190, and thus reducing the amount of oxidation that may occur before the blind holes 168 and 170 open and provide effusion cooling. Moreover, the width of the blind holes 168 and 170 may increase or decrease. An increase in width 184 and 186 expands the capacity of blind holes 168 and 170 to provide greater effusion cooling, while a decrease in the widths 184 and 186 reduces the effusion cooling capacity. Accordingly, various combinations are possible, wherein the depth 182 and/or width of blind hole 170 may be greater than or less than the depth 180 and/or width 186 of the blind hole 168. Accordingly, the systems 162 and 164 enable a tailored effusion cooling response to oxidation of the combustor wall 160.

FIG. 9 is a partial cross-sectional view of an embodiment of a combustor wall 160 with a thermal barrier coating spallation initiated effusion cooling system 162 in operation and an oxidation initiated effusion cooling system 164 within line 3-3 of FIG. 2. During operation, the TBC 172 (seen in FIG. 8) protects the metal combustor wall 160 from the oxidizing combustion gases 200. However, over time, the TBC 172 may separate (e.g., spall, erode, or be consumed away) from the interior surface 174. As illustrated, the separation of the TBC 172 opens the apertures 166 of the thermal barrier coating spallation initiated effusion cooling system 162. Once open, the apertures 166 enable cooling airflow 192 to pass through the combustor wall 160 into the combustor cavity 194. As the compressed air 192 enters the combustor cavity 194, the compressed air 192 creates a cooling airflow or film 196 over the interior surface 174. The cooling airflow or film 196 provides oxidation protection for the combustor wall 160.

FIG. 10 is a partial cross-sectional view of an embodiment of a combustor wall 160 with a thermal barrier coating spallation initiated effusion cooling system 162 and an oxidation initiated effusion cooling system 164 in operation within line 3-3 of FIG. 2. As illustrated, without the TBC 172, the combustion wall 160 is exposed to the combustion gases 200. Over time, the combustion gases 200 may cause oxidation of the wall 160, and as the wall 160 oxidizes it begins to deplete or be consumed away. After oxidization partially depletes or consumes away the wall 160 by a distance 188, the blind holes 168 open, enabling additional effusion cooling. More specifically, the compressed air 192 flowing though holes 168 increases the cooling airflow or film 196, thus blocking or further reducing oxidation of the combustor wall 160. If oxidation continues to deplete or consume the wall 100 by a distance 190, the oxidation will open the blind holes 170, further increasing the cooling airflow or film 196. In this manner, the system 162 may provide immediate or delayed effusion cooling protection with apertures 166, while the system 164 may provide delayed or secondary oxidation protection with the blind holes 168 and 170.

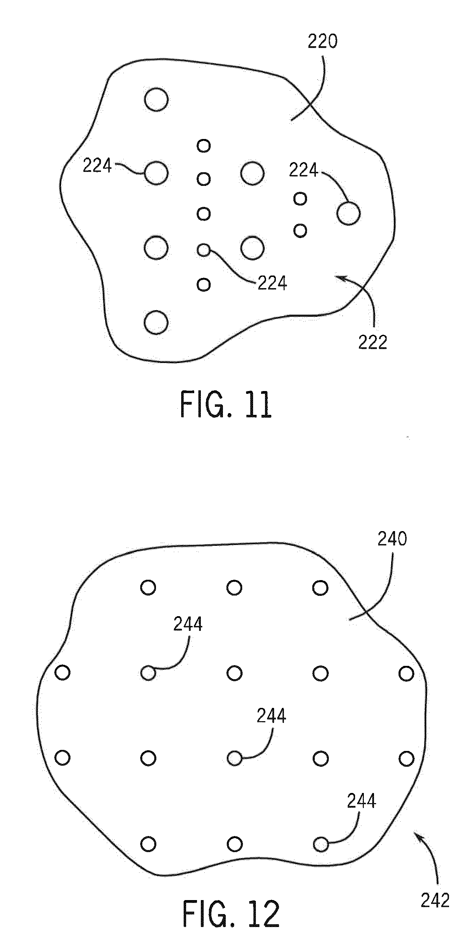

FIG. 11 is a partial sectional view of an embodiment of a combustor wall 220 with a system 222 for protecting the inner wall of a combustor 16 along line 11-11 of FIG. 2. The system 222 may be a thermal barrier coating spallation initiated effusion cooling system, an oxidation initiated effusion cooling system, or a combination thereof. Accordingly, the multiple holes 224, covered by a coating, may be apertures that completely penetrate the combustor wall 220, blind holes that partially penetrate the combustor wall 220, or a combination of apertures and blind holes. In the present embodiment, the holes 224 are in rows that alternate between increasing and decreased in size (e.g., diameter), as well as in number. Moreover, the holes 224 may vary in size, spacing, shape, depth, and number along the combustor wall 220 (i.e., non-uniform), enabling the system 222 to provide tailored oxidation protection to specific portions of the combustor.

FIG. 12 is a sectional view of an embodiment of a combustor wall 240 of FIG. 2 with a system 242 for protecting the inner wall of a combustor along line 11-11. The system 242 may be a thermal barrier coating spallation initiated effusion cooling system, an oxidation initiated effusion cooling system, or a combination thereof. Accordingly, the multiple holes 244, covered by a coating, may be apertures that completely penetrate the combustor wall 240, blind holes that partially penetrate the combustor wall 240, or a combination of apertures and blind holes. In the present embodiment, the holes 244 are uniform and equally spaced apart. Depending on the embodiment, the holes 244 may be equally spaced apart about the combustor 16 or on a portion of the combustor 16 (i.e., a portion that experiences excess oxidation). In this manner, the system 242 may provide complete or tailored oxidation protection of the entire combustor 16 or a portion thereof.

The technical effects of the invention include oxidation protection of a combustor wall with a cooling airflow or film. In particular, the disclosed embodiments include a thermal barrier coating spallation initiated effusion cooling system, an oxidation initiated effusion cooling system, or a combination thereof. As discussed above, the two systems provide a cooling airflow or film that reduces excess oxidation (e.g., depletion, consumption, etc.) of a combustor wall. Moreover, the apertures and blind holes associated with each system may vary in width, spacing, depth, shape, and location along the combustor (i.e., the width, spacing, depth and location may be uniform or non-uniform). Moreover, and as discussed above, these wall protection systems may provide immediate or delayed oxidation protection. Specifically, the thermal barrier coating spallation initiated effusion cooling system may provide immediate effusion cooling (i.e., oxidation protection) upon loss of the thermal barrier coating. The oxidation initiated effusion cooling system may provide a delayed response, allowing partial oxidation of the combustor wall before the blind holes open to provide effusion cooling (i.e., oxidation protection).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   a gas turbine combustor, comprising:
      an inner wall disposed about a combustion chamber; and
      an outer wall disposed about the inner wall, wherein a coolant flow path extends between the inner and outer walls;
      wherein the inner wall comprises a material blocking a plurality of openings, and the plurality of openings are configured to open after the material is consumed or depleted to define a plurality of coolant passages through the inner wall.
2. The system of clause 1, wherein the material is part of the inner wall.
3. The system of clause 1 or clause 2, wherein the material is part of a protective coating disposed over an inner surface of the inner wall.
4. The system of any preceding clause, wherein the protective coating comprises a thermal barrier coating, a chemical resistant coating, an oxidation resistant coating, or a combination thereof.
5. The system of any preceding clause, wherein the protective coating comprises a ceramic-based coating.
6. The system of any preceding clause, wherein the plurality of openings have a uniform width, a uniform spacing, a uniform depth, or any combination thereof.
7. The system of any preceding clause, wherein the plurality of openings have a variable width, a variable spacing, a variable depth, or any combination thereof.
8. The system of any preceding clause, wherein the plurality of coolant passages are configured to provide effusion cooling of the inner wall.
9. The system of any preceding clause, wherein the plurality of coolant passages are configured to provide film cooling of the inner wall.
10. The system of any preceding clause, wherein the plurality of coolant passages are configured to block exposure of the inner wall to hot combustion gases.
11. The system of any preceding clause, wherein the inner wall comprises a combustor liner, a transition piece, or any combination thereof.
12. The system of any preceding clause, comprising a gas turbine engine having the gas turbine combustor.
13. A system, comprising:
   a gas turbine engine, comprising:
      a coolant flow path;
      a combustion gas path; and
      a wall between the coolant flow path and the combustion gas path, wherein a first side of the wall faces the coolant flow path, and a second side of the wall faces the combustion gas path;
      wherein the wall comprises a material blocking a plurality of openings, and the plurality of openings are configured to open after oxidation of the material to define a plurality of coolant passages through the wall.
14. The system of any preceding clause, wherein the material is part of the wall.
15. The system of any preceding clause, wherein the material is part of a protective coating disposed over second side of the wall.
16. The system of any preceding clause, wherein the protective coating comprises a thermal barrier coating, a chemical resistant coating, an oxidation resistant coating, or a combination thereof.
17. The system of any preceding clause, wherein the plurality of coolant passages are configured to block exposure of the wall to hot combustion gases along the combustion gas path.
18. The system of any preceding clause, wherein the gas turbine engine comprises a gas turbine combustor having the wall.
19. A system, comprising:
   a combustion system, comprising:
      a coolant flow path;
      a combustion gas path; and
      a wall between the coolant flow path and the combustion gas path, wherein a first side of the wall faces the coolant flow path, and a second side of the wall faces the combustion gas path;
      wherein the wall comprises a material blocking a plurality of openings, and the plurality of openings are configured to open after oxidation of the material to define a plurality of coolant passages through the wall.
20. The system of any preceding clause, wherein the combustion system comprises a gas turbine engine, a gas turbine combustor, or a combination thereof, having the wall.

## Claims

1. A system, comprising:
a gas turbine combustor, comprising:
an inner wall disposed about a combustion chamber; and
an outer wall disposed about the inner wall, wherein a coolant flow path extends between the inner and outer walls;
wherein the inner wall comprises a material (98) blocking a plurality of openings (102), and the plurality of openings are configured to open after the material is consumed or depleted to define a plurality of coolant passages through the inner wall.

2. The system of claim 1, wherein the material is part of the inner wall.

3. The system of claim 1 or claim 2, wherein the material is part of a protective coating disposed over an inner surface of the inner wall.

4. The system of any preceding claim, wherein the protective coating comprises a thermal barrier coating, a chemical resistant coating, an oxidation resistant coating, or a combination thereof.

5. The system of any preceding claim, wherein the protective coating comprises a ceramic-based coating.

6. The system of any preceding claim, wherein the plurality of openings have a uniform width, a uniform spacing, a uniform depth, or any combination thereof.

7. The system of any preceding claim, wherein the plurality of openings have a variable width, a variable spacing, a variable depth, or any combination thereof.

8. The system of any preceding claim, wherein the plurality of coolant passages are configured to provide effusion cooling of the inner wall.

9. The system of any preceding claim, wherein the plurality of coolant passages are configured to provide film cooling of the inner wall.

10. The system of any preceding claim, wherein the plurality of coolant passages are configured to block exposure of the inner wall to hot combustion gases.

11. The system of any preceding claim, wherein the inner wall comprises a combustor liner, a transition piece, or any combination thereof.

12. The system of any preceding claim, comprising a gas turbine engine having the gas turbine combustor.

13. The system of any preceding claim, wherein the wall comprises a material blocking a plurality of openings, and the plurality of openings are configured to open after oxidation of the material to define a plurality of coolant passages through the wall.

14. A system, comprising:
a combustion system, comprising:
a coolant flow path;
a combustion gas path; and
a wall between the coolant flow path and the combustion gas path, wherein a first side of the wall faces the coolant flow path, and a second side of the wall faces the combustion gas path;
wherein the wall comprises a material blocking a plurality of openings, and the plurality of openings are configured to open after oxidation of the material to define a plurality of coolant passages through the wall.

15. The system of any preceding claim, wherein the system comprises a gas turbine engine, a gas turbine combustor, or a combination thereof, having the wall.
